# EUROPÄISCHE PATENTSCHRIFT

(11) **EP 3 681 750 B1**
(45) Veröffentlichungstag und Bekanntmachung des Hinweises auf die Patenterteilung: **13.04.2022**
(21) Anmeldenummer: 18746098.5
(22) Anmeldetag: 19.06.2018
(51) Int. Cl.: B60K 15/05

(54) **VERSCHLUSSVORRICHTUNG ZUM VERSCHLIESSEN EINER DURCHGANGSÖFFNUNG IN EINER FAHRZEUGKAROSSERIE UND FAHRZEUG MIT EINER SOLCHEN VERSCHLUSSVORRICHTUNG**
CLOSURE DEVICE FOR CLOSING A THROUGH-OPENING IN A VEHICLE BODY, AND VEHICLE COMPRISING SUCH A CLOSURE DEVICE
DISPOSITIF DE FERMETURE POUR FERMER UNE OUVERTURE DE PASSAGE DANS UNE CARROSSERIE DE VÉHICULE ET VÉHICULE ÉQUIPÉ D'UN TEL DISPOSITIF DE FERMETURE

(30) Priorität: 26.08.2017 DE 102017008108
(43) Veröffentlichungstag der Anmeldung: 22.07.2020
(73) Patentinhaber: Mercedes-Benz Group AG, 70372 Stuttgart (DE)
(72) Erfinder: SCHURZ, Andreas, 73235 Weilheim (DE); ROHSE, Tobias, 71701 Schwieberdingen (DE); KLINGER, Julius, Friedrich, 71063 Sindelfingen (DE); UHRIG, Andreas, 71638 Ludwigsburg (DE); GÖRLICH, Jörn, 71139 Ehningen (DE); JOERG, Roland, 72108 Rottenburg (DE); HANEL, Frederik, 70184 Stuttgart (DE); MUCH, Wolfgang, 72218 Effringen (DE)
(74) Vertreter: JENSEN & SON
(86) Internationale Anmeldenummer: PCT/EP2018/066180
(87) Internationale Veröffentlichungsnummer: WO 2019/042616

(56) Entgegenhaltungen:
- DE-U1-202011 050 412
- FR-A1- 2 949 394

## Beschreibung

Die Erfindung betrifft eine Verschlussvorrichtung zum Verschließen einer Durchgangsöffnung in einer Fahrzeugkarosserie, gemäß Oberbegriff des Anspruchs 1, und ein Fahrzeug mit einer solchen Verschlussvorrichtung.

Aus der DE 20 2014 101 216 U1 geht eine Verschlussvorrichtung zum Verschließen einer Durchgangsöffnung in einer Fahrzeugkarosserie hervor, wobei über die Durchgangsöffnung ein Innenraum mit einer Befüllungs- oder Anschlusseinrichtung zugänglich ist. Die bekannte Verschlussvorrichtung weist ein Verschlusselement auf, das zwischen einer Offenstellung, in der die Durchgangsöffnung freigegeben ist, und einer Schließstellung, in der die Durchgangsöffnung durch das darin zumindest bereichsweise angeordnete Verschlusselement geschlossen ist, verlagerbar ist. Zur Verlagerung zwischen der Offenstellung und der Schließstellung ist das Verschlusselement typischerweise um eine ortsfeste Achse schwenkbar gelagert, wobei es eine reine Schwenkbewegung um die ortsfeste Achse vollführt. Somit ändert das Verschlusselement bei der Verlagerung von seiner Offenstellung in seine Schließstellung seine flächenmäßige Orientierung im Raum, das heißt insbesondere die Orientierung eines auf einer Außenfläche des Verschlusselements zumindest lokal senkrecht stehenden Normalenvektors, wodurch das Verschlusselement in der Offenstellung vergleichsweise viel Bauraum benötigt. Auch für die Schwenkbewegung selbst muss ein vergleichsweise großer Freiraum bereitgestellt werden, der anderweitig nicht genutzt werden kann.

Aus der DE 10 2011 090 205 A1 geht eine Vorrichtung zum Verschließen einer in einer Karosserieaußenhaut vorgesehenen Öffnung hervor, über welche ein Tankeinfüllstutzen zugänglich ist. Die Öffnung ist mittels einer Tankklappe verschließbar, wobei die Tankklappe mittels eines Antriebs gegenüber der Karosserieaußenhaut nach außen hin in eine Offenstellung verstellbar ist. Dazu vollführt die Tankklappe eine überlagerte translatorische und rotatorische Bewegung, welche mittels einer Kulissenführung realisiert ist. Die Tankklappe ist an einem mit einem Permanentmagneten versehenen Trägerelement angebracht, welches in einer zentralen Bohrung eines Führungsgehäuses beweglich gelagert ist, wobei das Führungsgehäuse von einer Spule umgeben ist, mittels welcher ein magnetisches Feld zur Verlagerung des Trägerelements in axialer Richtung des Führungsgehäuses erzeugt werden kann. Diese Art von Antrieb ist relativ kostenintensiv, insbesondere auch aufgrund seiner Anordnung im Nassbereich des Fahrzeugs und der somit erforderlichen Abdichtung, und auch relativ störungsanfällig. Ferner ist eine exakte Positionierung der Tankklappe in ihren Endpositionen ohne entsprechende, in Bezug auf Lagetoleranzen kritische Anschläge nicht ohne weiteres möglich.

Aus der DE 20 2011 050 412 U1 geht eine Tankdeckeleinheit für ein Kraftfahrzeug hervor, bei welcher ein eine Karosserieöffnung verschließender Verschlussdeckel mittels einer Kulissenführung gegenüber der Karosserieaußenhaut nach außen hin in eine Übergangsposition axial verfahrbar und zwischen der Übergangsposition und einer Öffnungsposition verdrehbar ist. Als Antrieb ist hierfür eine mittels eines Elektromotor antreibbare Spindel vorgesehen.

Aus der gattungsbildenden DE 103 50 466 A1 geht eine Vorrichtung zum Verschließen einer Tankzugangsöffnung in einer Kraftfahrzeugaußenhaut hervor.

Der Erfindung liegt die Aufgabe zugrunde, eine Verschlussvorrichtung zum Verschließen einer Durchgangsöffnung in einer Fahrzeugkarosserie zu schaffen, die eine kompakte, raumsparende Bauweise ermöglicht und kostengünstig herstellbar sowie funktionssicher ist. Eine weitere Aufgabe ist es, ein Fahrzeug mit einer solchen Verschlussvorrichtung zu schaffen.

Die Aufgabe wird gelöst, indem die Gegenstände der unabhängigen Ansprüche geschaffen werden. Vorteilhafte Ausgestaltungen ergeben sich aus den Unteransprüchen.

Die Verschlussvorrichtung umfasst ein Verschlusselement zum Verschließen einer Durchgangsöffnung in einer Fahrzeugkarosserie, welches mittels eines Antriebs und einer Verstelleinrichtung in mehrere Funktionsstellungen, insbesondere zwischen einer die Durchgangsöffnung freigebenden Offenstellung und einer die Durchgangsöffnung abdeckenden beziehungsweise verschließenden Schließstellung verlagerbar ist, wobei das Verschlusselement in der Schließstellung zumindest bereichsweise in der Durchgangsöffnung angeordnet ist. Die Verschlussvorrichtung ist so eingerichtet, um das Verschlusselement von der Schließstellung in die Offenstellung und zurück mit einer Kombination aus einer translatorischen Bewegung und einer Schwenkbewegung in den Innenraum der Fahrzeugkarosserie, also in eine Position hinter der Karosserieaußenhaut zu verlagern, wodurch sich ein verringerter Bauraumbedarf für die Verlagerung selbst und für die Anordnung des Verschlusselements in der Offenstellung ergibt.

Die Verschlussvorrichtung zeichnet sich dadurch aus, dass die Verstelleinrichtung ein an einer Fahrzeugkarosserie raumfest anordenbares Führungsgehäuse umfasst, in dem ein Trägerelement translatorisch und schwenkbar geführt ist, wobei das Trägerelement das Verschlusselement aufweist. Des Weiteren ist eine Kulissenführung vorgesehen, mittels der das Trägerelement gegenüber dem Führungsgehäuse translatorisch verlagerbar und schwenkbar ist. Weiterhin ist ein über wenigstens ein Drehlager mit dem Trägerelement translatorisch mitnehmbar und zugleich rotatorisch entkoppelt verbundenes Zugelement vorgesehen, das mittels des Antriebs translatorisch verlagerbar ist. Der Antrieb wirkt also nicht unmittelbar auf das Verschlusselement beziehungsweise das Trägerelement ein, sondern mittelbar über das Zugelement. Hierdurch ist eine gewisse beziehungsweise entsprechende Entkopplung zwischen Zugelement und Trägerelement möglich. Über das angetriebene, insbesondere motorisch angetriebene Zugelement sind Zugkräfte in das Trägerelement einleitbar, sodass dem Trägerelement über das Zugelement eine translatorische Bewegung vermittelt werden kann. Dies ermöglicht eine insgesamt schmale Ausführung der Verschlussvorrichtung, da der Antrieb in Verlagerungsrichtung des Trägerelements angeordnet werden kann. Aufgrund des vorgesehenen Drehlagers ist das Trägerelement von dem Zugelement rotatorisch entkoppelt. Dies ermöglicht eine Schwenkbewegung des Trägerelements, ohne dass das Zugelement verschwenkt werden muss. Vielmehr kann das Zugelement ausschließlich translatorisch verlagert werden, wobei - insbesondere durch die Kulissenführung - das Trägerelement zugleich translatorisch verlagert und verschwenkt werden kann.

Das Drehlager ist vorzugsweise als Kugellager, als Gleitlager, als Wälzlager oder in anderer geeigneter Weise ausgebildet.

Das Verschlusselement ist insbesondere mitnehmbar an dem Trägerelement befestigt, wobei es insbesondere relativ zu dem Trägerelement nicht verlagerbar ist, das heißt in einem mit dem Trägerelement mitbewegten Koordinatensystem raumfest gehalten ist. Das Führungsgehäuse ist demgegenüber an der Fahrzeugkarosserie ortsfest angeordnet, sodass sich eine Relativverlagerung des Verschlusselements relativ zu der Fahrzeugkarosserie ergibt, wenn das Trägerelement relativ zu dem Führungsgehäuse verlagert wird. Grundsätzlich ist es auch möglich, dass das Verschlusselement und das Trägerelement einteilig oder einstückig miteinander ausgebildet sind.

Insbesondere kann aufgrund dieser Ausgestaltung der Verstelleinrichtung eine andere Schwenkachse verwendet werden als bei einer reinen Schwenkbewegung, wobei letztere insbesondere kein Verschwenken um eine Schwenkachse erlaubt, die quer oder zumindest im Wesentlichen senkrecht auf der Fahrzeugkarosserie im Bereich der Durchgangsöffnung steht. Bei einer solchen Verschwenkung würde nämlich das in der Schließstellung zumindest bereichsweise in der Durchgangsöffnung angeordnete Verschlusselement blockieren, da es an den Rändern der Durchgangsöffnung anstößt. Wird es allerdings durch die translatorische Bewegung aus der Durchgangsöffnung heraus verlagert, kann es dann auch um eine Achse verschwenkt werden, die im Wesentlichen senkrecht auf der Fahrzeugkarosserie im Bereich der Durchgangsöffnung steht, wobei es bevorzugt parallel hinter eine Wandung der Fahrzeugkarosserie verschwenkt werden kann. Die Verlagerung des Verschlusselements von der Offenstellung in die Schließstellung - und zurück - bedarf so nur eines sehr geringen Bauraums, wobei das Verschlusselement auch in der Schließstellung bauraumsparend hinter und parallel zu der Wandung der Fahrzeugkarosserie angeordnet werden kann.

Unter einer Befüllungs- oder Anschlusseinrichtung wird insbesondere eine Einrichtung verstanden, die es erlaubt, einem Fahrzeug wenigstens einen Stoff oder ein Stoffgemisch und/oder Energie, sei es in Form von chemischer Energie, in Form von elektrischer Energie, insbesondere über eine galvanische Verbindung oder eine galvanisch getrennte Schnittstelle, beispielsweise induktiv, oder in anderer Weise zuzuführen. Insbesondere kann es sich bei der Befüllungs- oder Anschlusseinrichtung um einen Tankstutzen, insbesondere für Kraftstoff oder einen Zusatz- oder Hilfsstoff, eine Ladebuchse zur Zuführung von elektrischer Energie, insbesondere um eine Steckbuchse, einen Anschluss für ein induktives Laden, oder dergleichen handeln. Das Verschlusselement ist demnach insbesondere als Tankdeckel oder Ladeanschlussdeckel ausgebildet.

Dass die Durchgangsöffnung in der Schließstellung durch das Verschlusselement geschlossen ist, bedeutet insbesondere, dass sie zu einem Äußeren der Fahrzeugkarosserie hin durch das Verschlusselement abgedeckt, das heißt von der Fahrzeugaußenseite her aufgrund der Anordnung des Verschlusselements in der Schließstellung unzugänglich ist. In der Offenstellung ist die Durchgangsöffnung dagegen zugänglich, sodass die Befüllungs- oder Anschlusseinrichtung bestimmungsgemäß verwendet und dem Fahrzeug insbesondere von außen durch die Durchgangsöffnung wenigstens ein Stoff oder Stoffgemisch und/oder Energie zugeführt werden kann.

Unter einer Kombination aus einer translatorischen Bewegung und einer Schwenkbewegung wird insbesondere verstanden, dass das Verschlusselement entlang seines Verlagerungswegs von der Schließstellung in die Offenstellung - und zurück - zumindest abschnittsweise eine translatorische Bewegung sowie zumindest abschnittsweise - in gleichen oder anderen Abschnitten - eine Schwenkbewegung ausführt. Dabei ist es möglich, dass die translatorische Bewegung und die Schwenkbewegung in dem Sinne voneinander entkoppelt sind, dass in verschiedenen Abschnitten des Verlagerungswegs einerseits eine translatorische Bewegung und andererseits eine Schwenkbewegung erfolgt, wobei beispielsweise das Verschlusselement zunächst aus der Schließstellung mit einer translatorischen Bewegung entfernt, insbesondere in den Innenraum zurückgezogen wird, wobei es anschließend durch eine reine Schwenkbewegung in die Offenstellung verschwenkt wird. Unter einer Kombination aus einer translatorischen Bewegung und einer Schwenkbewegung wird aber auch eine Überlagerung einer translatorischen Bewegung und einer Schwenkbewegung verstanden, wobei das Verschlusselement zumindest abschnittsweise entlang seines Verlagerungswegs zwischen der Schließstellung und der Offenstellung eine Bewegungsbahn beschreibt, die aus einer Linearkombination, also einer Superposition, einer translatorischen Bewegungskomponente und einer Schwenkbewegungskomponente resultiert. Dabei ist es möglich, dass entlang des Verlagerungswegs zusätzlich Abschnitte mit einer reinen translatorischen Bewegung und/oder einer reinen Schwenkbewegung existieren, es ist aber auch möglich, dass das Verschlusselement entlang seines gesamten Verlagerungswegs einer Bewegungsbahn folgt, die aus einer Superposition einer translatorischen Bewegungskomponente mit einer rotatorischen Bewegungskomponente resultiert.

Die translatorische Bewegung ist bevorzugt ausgehend von der Schließstellung des Verschlusselements in der Durchgangsöffnung nach innen in den Innenraum ausgerichtet, wobei eine Translationsrichtung oder Translationsachse der translatorischen Bewegung vorzugsweise lokal senkrecht auf einer Außenfläche des Verschlusselements und damit auch der Fahrzeugkarosserie steht. Ist die Verschlussvorrichtung an einem Fahrzeug seitlich angebracht, weist die Translationsachse bevorzugt - bei üblicher Wahl des Koordinatensystems für das Fahrzeug - zumindest im Wesentlichen in Y-Richtung, also in Fahrzeugbreitenrichtung.

Die Schwenkbewegung erfolgt bevorzugt um eine Schwenkachse, die zumindest im Wesentlichen parallel, vorzugsweise parallel zu der Translationsachse ausgerichtet ist. Besonders bevorzugt erfolgt die Schwenkbewegung um die Translationsachse. Insbesondere erfolgt die Schwenkbewegung bevorzugt um eine in Querrichtung (y-Richtung) des Fahrzeugs verlaufende Achse. Auf diese Weise kann das Verschlusselement einerseits nach innen, also in eine gegenüber der Karosserieaußenfläche zurückversesetzte Position gezogen und andererseits hinter die Karosseriewandung geschwenkt werden.

Gemäß einer Weiterbildung der Erfindung ist vorgesehen, dass die Außenfläche des Verschlusselements in der Schließstellung bündig mit einer die Durchgangsöffnung umgebenden Karosserieaußenfläche der Fahrzeugkarosserie angeordnet ist. Es ergibt sich so eine optisch besonders ansprechende, flächenbündige Anordnung des Verschlusselements in der Schließstellung mit der Fahrzeugkarosserie und insbesondere der Fahrzeugaußenhaut, sodass im Bereich der Verschlussvorrichtung keine optischen Vor- oder Rücksprünge entstehen.

In der Offenstellung ist das Verschlusselement bevorzugt so weit in den Innenraum der Fahrzeugkarosserie hinein verlagert, dass es von außen, insbesondere bei in senkrechter Blickrichtung auf die Durchgangsöffnung, nicht mehr sichtbar ist. Das Fahrzeug weist dann auch in der Offenstellung eine optisch besonders ansprechende Anmutung auf.

Gemäß einer Weiterbildung der Erfindung ist vorgesehen, dass der dem Verschlusselement zu dessen Verlagerung zwischen der Schließstellung und der Offenstellung - und zurück - zugeordnete Antrieb als motorischer Antrieb, besonders bevorzugt als elektromotorischer Antrieb, ausgebildet ist. Dies stellt für den Benutzer der Verschlussvorrichtung eine besonders komfortable Ausgestaltung dar, weil er das Verschlusselement dann nicht manuell betätigen muss.

Es ist möglich, dass der Antrieb durch Betätigung eines Tasters aktivierbar ist. Besonders bevorzugt ist der Antrieb allerdings mit einer Steuereinrichtung verbunden, die eingerichtet ist, um den Antrieb automatisiert, insbesondere ereignisgesteuert, anzusteuern. Besonders bevorzugt ist an der Verschlussvorrichtung ein Näherungssensor angeordnet, der erkennt, wenn sich beispielsweise die Hand eines Benutzers, oder ein Zuführmittel zur Zuführung von Energie oder einem Stoff oder Stoffgemisch dem Verschlusselement nähert, wobei der Näherungssensor in diesem Fall ein Signal ausgibt, auf das hin der Antrieb zur Verlagerung des Verschlusselements aus seiner Schließstellung in seine Offenstellung angesteuert wird. Umgekehrt kann der Antrieb zur Verlagerung des Verschlusselements von dessen Offenstellung in seine Schließstellung angesteuert werden, wenn der Näherungssensor erkennt, dass die Zuführeinrichtung und/oder die Hand des Benutzers von der Verschlussvorrichtung wieder weg verlagert werden.

Gemäß einer alternativen Ausgestaltung kann der Antrieb aber auch einen einfachen Seilzug, ein Gestänge oder dergleichen umfassen, mithin rein mechanisch ausgebildet sein, wobei er durch einen Benutzer des Fahrzeugs händisch betätigbar ist, beispielsweise von einem Fahrerplatz aus.

Selbstverständlich ist es aber auch möglich, dass das Verschlusselement manuell, insbesondere durch direktes Angreifen an dem Verschlusselement selbst, von seiner Offenstellung in die Schließstellung - und zurück - verlagerbar ist.

Gemäß einer bevorzugten Ausgestaltung der Verschlussvorrichtung ist vorgesehen, dass die Befüllungs- oder Anschlusseinrichtung - vorzugsweise zugleich mit der Verlagerung des Verschlusselements zwischen der Schließstellung und der Offenstellung - verlagerbar ist, wobei die Befüllungs- oder Anschlusseinrichtung insbesondere für ein Anschließen oder eine Befüllung von einer Ruheposition in Richtung des Äußeren der Fahrzeug-Karosserie, insbesondere in Fahrzeugquerrichtung, in eine Arbeitsposition verlagert werden kann, um das Befüllen und/oder Anschließen zu vereinfachen. Vor oder während der Verlagerung des Verschlusselements von der Offenstellung in die Schließstellung kann dann die Befüllungs- oder Anschlusseinrichtung wieder zurück in ihre Ruheposition, insbesondere in den Innenraum, vorzugsweise wiederum in Querrichtung des Fahrzeugs, verlagert werden. Es ist möglich, dass zur Verlagerung der Befüllungs- oder Anschlusseinrichtung ein separater Antrieb, insbesondere ein separater motorischer Antrieb, vorgesehen ist. Es ist aber auch möglich, dass die Befüllungs- oder Anschlusseinrichtung durch denselben Antrieb verlagerbar ist, der auch dem Verschlusselement zu dessen Verlagerung zugeordnet ist.

Das Trägerelement ist insbesondere entlang einer Translationsachse translatorisch und um eine Schwenkachse schwenkbar gelagert. Vorzugsweise fällt die Schwenkachse mit der Translationsachse zusammen oder ist zumindest in Wesentlichen parallel, vorzugsweise parallel zu der Translationsachse ausgerichtet.

Vorzugsweise weist die Verstelleinrichtung eine Verstellvorrichtung zur Verstellung einer Befüllungs- oder Anschlusseinrichtung auf, sodass diese mittels der Verstellvorrichtung zwischen einer Arbeitsposition und einer Ruheposition verlagert werden kann.

Gemäß einer Weiterbildung der Erfindung ist vorgesehen, dass das Führungsgehäuse für das Trägerelement rohrförmig ausgebildet ist. Dies ermöglicht eine besonders einfache und stabile Aufnahme und Führung des Trägerelements in dem Führungsgehäuse. Insbesondere kann das Führungsgehäuse als Führungsrohr ausgebildet sein.

Gemäß einer Weiterbildung der Erfindung ist vorgesehen, dass die Kulissenführung, mittels der das Trägerelement gegenüber dem Führungsgehäuse translatorisch verlagerbar und schwenkbar gekoppelt ist, insbesondere ausgebildet ist, um das Trägerelement in dem Führungsgehäuse entlang einer vorbestimmten Bewegungsbahn zu führen, vorzugsweise ein erstes Teil, ausgewählt aus dem Führungsgehäuse und dem Trägerelement, wenigstens einen Führungspin oder Führungsstift oder dergleichen aufweist, wobei ein zweites, von dem ersten Teil verschiedenes Teil, ausgewählt aus dem Trägerelement und dem Führungsgehäuse, wenigstens eine Führungsaussparung aufweist. Der wenigstens eine Führungsstift greift in die wenigstens eine Führungsaussparung ein, und die Führungsaussparung ist ausgebildet, um zumindest abschnittsweise eine translatorische Relativbewegung zwischen dem Trägerelement und dem Führungsgehäuse mit einer Schwenkbewegung des Trägerelements zu koppeln. Dies bedeutet insbesondere, dass die Führungsaussparung aufgrund ihrer räumlich-geometrischen Ausgestaltung und aufgrund der Kopplung des Führungsgehäuses mit dem Trägerelement über den in die Führungsaussparung eingreifenden Führungsstift bewirkt, dass eine translatorische Verlagerung des Trägerelements relativ zu dem Führungsgehäuse zumindest abschnittsweise von einer Schwenkbewegung des Trägerelements überlagert wird, oder dass umgekehrt einer Schwenkbewegung des Trägerelements eine translatorische Relativbewegung überlagert wird.

Die mindestens eine Führungsaussparung ist bevorzugt zumindest abschnittsweise gewendelt, insbesondere ähnlich einer Spirale oder Schraubenfeder gewunden, ausgebildet, wobei sie sich bevorzugt um die Translationsachse der Translationsbewegung des Trägerelements windet. Es ist möglich, dass die Führungsaussparung entlang ihrer gesamten Erstreckung gewunden ausgebildet ist. Es ist aber auch möglich, dass sie zumindest abschnittsweise geradlinig ausgebildet ist. Insbesondere ist es möglich, dass die Führungsaussparung in einem Anfangsbereich, beginnend an einem Ort der Führungsaussparung, an welchem der Führungsstift in der Schließstellung angeordnet ist, über eine vorbestimmte Erstreckung in Richtung der Offenstellung geradlinig ausgebildet ist, bevor sie in einen gewundenen Verlauf übergeht. Auf diese Weise kann zunächst eine translatorische Bewegung des Verschlusselements aus der Schließstellung heraus bewirkt werden, wobei sich daran eine Überlagerung aus einer translatorischen Bewegung und einer Schwenkbewegung anschließt.

Gemäß einer bevorzugten Ausgestaltung ist die Führungsaussparung als Führungsnut ausgebildet. Alternativ ist es möglich, dass die Führungsaussparung auch durch einen Schlitz gebildet sein kann.

Bevorzugt ist der wenigstens eine Führungsstift an dem Führungsgehäuse angeordnet, wobei die wenigstens eine Führungsaussparung an dem Trägerelement angeordnet ist. Es ist aber auch eine umgekehrte Ausgestaltung möglich.

Vorzugsweise weist die Kulissenführung eine Mehrzahl von Führungsstiften und eine Mehrzahl von Führungsaussparungen auf, wobei bevorzugt jedem Führungsstift eine Führungsaussparung und jeder Führungsaussparung ein Führungsstift zugeordnet sind. Die Führungsstifte und/oder Führungsaussparungen sind vorzugsweise - entlang einer Umfangsrichtung gesehen, die sich konzentrisch um die Translationsachse und/oder die Schwenkachse erstreckt - symmetrisch, insbesondere in gleichen Winkelabständen zueinander, angeordnet. Besonders bevorzugt weist die Kulissenführung vier Führungsstifte und vier Führungsaussparungen auf.

Gemäß einer Weiterbildung der Erfindung ist vorgesehen, dass das Zugelement als Zahnstange ausgebildet ist. Dies stellt eine besonders einfache und einfach anzutreibende Ausgestaltung des Zugelements dar. Die Zahnstange weist außer einem Zähne aufweisenden Längsabschnitt auch noch einen Kopplungsabschnitt auf, in dessen Bereich die Zahnstange/das Zugelement mit dem Trägerelement gekoppelt ist.

Das Zugelement wirkt vorzugsweise mit einem Zahnrad zusammen, welches durch einen Motor, insbesondere durch einen Elektromotor, angetrieben ist. Auf diese Weise kann eine Rotationsbewegung des Motors in eine Translationsbewegung des Zugelements umgewandelt werden. Der Motor ist vorzugsweise über ein Getriebe mit dem Zahnrad antriebswirkverbunden. Das Getriebe ist vorzugsweise selbsthemmend ausgebildet. In diesem Fall ist eine Verlagerung des Verschlusselements nur durch Aktivieren des Motors möglich, da die Selbsthemmung des Getriebes eine Verlagerung des Verschlusselements verhindert, wenn Kräfte in das Verschlusselement eingeleitet werden, ohne dass der Motor betrieben wird.

Gemäß einer Weiterbildung der Erfindung ist vorgesehen, dass die Verschlussvorrichtung eine Verstelleinrichtung nach einem der zuvor beschriebenen Ausführungsbeispiele aufweist. Insbesondere ist dem Verschlusselement eine Verstelleinrichtung nach einem der zuvor beschriebenen Ausführungsbeispiele zu dessen Verlagerung zwischen der Schließstellung und der Offenstellung - und zurück - zugeordnet. Das Verschlusselement ist dabei mitnehmbar an dem Trägerelement angeordnet.

Die Aufgabe wird schließlich auch gelöst, indem ein Fahrzeug geschaffen wird, welches eine Verschlussvorrichtung nach einem der zuvor beschriebenen Ausführungsbeispiele aufweist. Dabei ergeben sich in Zusammenhang mit dem Fahrzeug insbesondere die Vorteile, die bereits in Zusammenhang mit der Verschlussvorrichtung erläutert wurden.

Das Verschlusselement des Fahrzeugs ist insbesondere als Tank- oder Ladeanschlussdeckel ausgebildet.

Die Erfindung wird im Folgenden anhand der Zeichnung näher erläutert. Dabei zeigen:
- Fig. 1: eine Detaildarstellung eines Ausführungsbeispiels eines Fahrzeugs mit einem Ausführungsbeispiel einer Verschlussvorrichtung;
- Fig. 2: eine Detaildarstellung des Ausführungsbeispiels der Verschlussvorrichtung gemäß Figur 1 mit einem Ausführungsbeispiel einer Verstelleinrichtung zum Verlagern des Verschlusselements und
- Fig. 3: eine schematische Detail-Schnittdarstellung der Verstelleinrichtung gemäß Figur 2.

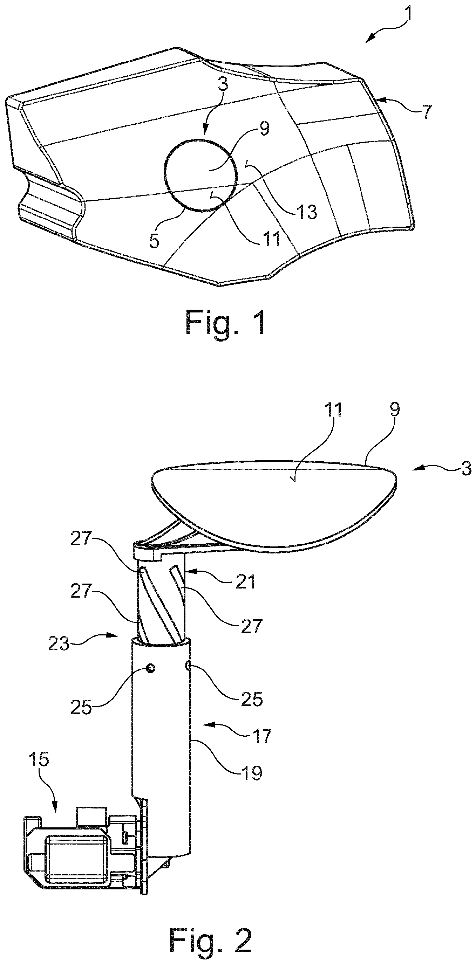

Figur 1 zeigt eine schematische Detaildarstellung eines Ausführungsbeispiels eines Fahrzeugs 1 mit einem Ausführungsbeispiel einer Verschlussvorrichtung 3, die zum Verschließen eine Durchgangsöffnung 5 in einer Fahrzeugkarosserie 7 des Fahrzeugs 1 dient. Über die Durchgangsöffnung 5 ist von der Fahrzeugaußenseite her ein in Figur 1 verdeckter Innenraum zugänglich, in dem eine Befüllungs- oder Anschlusseinrichtung, insbesondere zur Zufuhr von wenigstens einem Stoff oder Stoffgemisch und/oder von Energie in das Fahrzeug 1 angeordnet ist.

Die Verschlussvorrichtung 3 weist ein Verschlusselement 9 auf, das zwischen einer Offenstellung, in der die Durchgangsöffnung 5 freigegeben ist, und einer in Figur 1 dargestellten Schließstellung, in der die Durchgangsöffnung 5 durch das Verschlusselement 9 geschlossen ist, verlagerbar ist. Das Verschlusselement 9 ist in der Schließstellung zumindest bereichsweise in der Durchgangsöffnung 5 angeordnet, wobei es bei dem hier in den Figuren dargestellten Ausführungsbeispiel insbesondere eine Außenfläche 11 aufweist, die in der Schließstellung bündig, insbesondere flächenbündig, vorzugsweise fluchtend, mit einer die Durchgangsöffnung 5 unmittelbar umgebenden, an die Durchgangsöffnung 5 angrenzenden Karosserieaußenfläche 13 der Fahrzeugkarosserie 7 angeordnet ist. Das Verschlusselement 9 ist ein flächiges, insbesondere tafel- oder klappenähnliches Bauteil, das so geformt ist, dass es sich in seiner Schließstellung üblicherweise in die Karosserieaußenhaut optisch so einfügt, als wenn die Karosserieaußenhaut an dieser Stelle ununterbrochen wäre.

Figur 2 zeigt eine Detaildarstellung der Verschlussvorrichtung 3 gemäß Figur 1. Gleiche und funktionsgleiche Elemente sind mit gleichen Bezugszeichen versehen, sodass insofern auf die vorangegangene Beschreibung verwiesen wird. Die Verschlussvorrichtung 3 ist eingerichtet, das heißt so ausgebildet, damit diese im am Fahrzeug verbauten Zustand das Verschlusselement 9 von der Schließstellung in die Offenstellung - und bevorzugt zurück - mit einer Kombination aus einer translatorischen Bewegung und einer Schwenkbewegung in den Innenraum der Fahrzeugkarosserie 7 verlagern kann. Bei der bestimmungsgemäßen Verstellung des Verschlusselements 9 findet also zumindest über eine Teilstrecke des Verstellweges eine Überlagerung von Translations- und Rotationsbewegungen statt. Grundsätzlich ist es auch möglich, dass das Verschlusselement 9 über eine Teilstrecke seines Verstellweges eine reine Linearbewegung entlang einer Gerade oder Achse ausführt. Diese Art einer Hubbewegung kann dazu dienen, das Verschlusselement in die Durchgangsöffnung einzubringen oder aus dieser heraus zu bewegen, ohne dass dabei das Verschlusselement gegen benachbarte, an die Durchgangsöffnung angrenzende beziehungsweise diese begrenzende Karosseriebereiche, insbesondere Karosserieaußenhautbereiche stößt.

Auf diese Weise ist es insbesondere möglich, die Verlagerung des Verschlusselements 9 selbst sehr bauraumsparend auszugestalten und zugleich auch Bauraum in der Offenstellung des Verschlusselements 9 einzusparen. Dieses kann insbesondere ausgehend von der in Figur 1 dargestellten Schließstellung in den Innenraum eingezogen und dann hinter die Fahrzeugkarosserie 7 verschwenkt werden, sodass es in der Offenstellung - wie auch in der Schließstellung - im Wesentlichen parallel zu der Fahrzeugkarosserie 7 und insbesondere zu der Karosserieaußenfläche 13 angeordnet ist, wodurch es auch in der Offenstellung wenig Bauraum beansprucht. Hierdurch ist das Verschlusselement 9 vor äußeren Einflüssen, beispielsweise einer ungewollten manuellen Manipulation durch Dritte, geschützt im Innenraum angeordnet.

Dem Verschlusselement 9 ist ein Antrieb 15, insbesondere ein motorischer Antrieb 15, zur Verlagerung zwischen der Schließstellung und der Offenstellung zugeordnet. Der Antrieb 15 ist bevorzugt als Elektromotor ausgebildet.

Die Verschlussvorrichtung 3 weist eine Verstelleinrichtung 17 auf, die eingerichtet ist zum Verlagern des Verschlusselements 9 zwischen der Offenstellung und der Schließstellung. Die Verstelleinrichtung 17 weist ein an der Fahrzeugkarosserie 7 raumfest anordenbares, vorzugsweise an der Fahrzeugkarosserie 7 raumfest angeordnetes Führungsgehäuse 19 auf, wobei in dem Führungsgehäuse 19 ein Trägerelement 21 translatorisch, das heißt entlang einer Geraden, und schwenkbar geführt ist. Insbesondere ist das Trägerelement 21 in Richtung einer Längsachse des Führungsgehäuses 19 translatorisch verlagerbar und um die Längsachse des Führungsgehäuses 19 schwenkbar in dem Führungsgehäuse 19 geführt.

An dem Trägerelement 21 ist das Verschlusselement 9 befestigt. Insbesondere ist hier das Verschlusselement 9 an dem Trägerelement 21 mitnehmbar und im Bezugssystem des Trägerelements 21 raumfest an diesem befestigt. Vorteilhaft an der getrennten Ausbildung von Trägerelement und Verschlusselement ist unter anderem, dass falls das Verschlusselement in Fahrzeugfarbe lackiert werden sollte, dies erfolgen kann, bevor das Verschlusselement mit dem Trägerelement verbunden wird.

Das Führungsgehäuse 19 ist rohrförmig ausgebildet, wobei das Trägerelement 21 in dem Inneren des rohrförmigen Führungsgehäuses 19 so gelagert ist, dass es relativ gegenüber dem Führungsgehäuse 19 bewegbar ist, worauf im Folgenden noch näher eingegangen wird.

Die Verstelleinrichtung 17 weist eine Kulissenführung 23 auf, über die beziehungsweise mit deren Hilfe das Trägerelement 21 mit dem Führungsgehäuse 19 so gekoppelt ist, dass das Trägerelement 21 dabei relativ gegenüber dem an der Fahrzeugkarosserie ortsfest fixierten Führungsgehäuse 19 translatorisch verlagerbar und schwenkbar ist. Dabei weist bei dem hier dargestellten Ausführungsbeispiel das Führungsgehäuse 19 wenigstens einen Führungsstift, hier eine Mehrzahl von Führungsstiften 25, insbesondere vier Führungsstifte 25, auf, wobei das zylinder-, stab- oder rohrförmige Trägerelement 21 an seiner Außenseite, das heißt an seiner Mantelfläche wenigstens eine Führungsaussparung, hier eine Mehrzahl von Führungsaussparungen 27, insbesondere vier Führungsaussparungen 27, aufweist. Die Führungsstifte 25 greifen in die Führungsaussparungen 27 ein. Es ist alternativ auch möglich, dass das Führungsgehäuse 19 wenigstens eine Führungsaussparung 27 aufweist, wobei das Trägerelement 21 wenigstens einen Führungsstift 25 aufweist. Es ist auch möglich, dass das Führungsgehäuse 19 sowohl wenigstens einen Führungsstift 25 als auch wenigstens eine Führungsaussparung 27 aufweist, wobei auch das Trägerelement 21 wenigstens eine Führungsaussparung 27 und wenigstens einen Führungsstift 25 aufweist.

Die Führungsaussparungen 27 sind hier insbesondere als Führungsnuten ausgebildet. Grundsätzlich ist es auch möglich, das eine jeweilige Führungsaussparung 27 durch einen Schlitz gebildet ist, wobei hierzu der mit dem Schlitz in Eingriff zu bringende Führungsstift entsprechend zu dimensionieren wäre.

Die Führungsaussparungen 27 sind ausgebildet, um zumindest abschnittsweise eine translatorische Relativbewegung zwischen dem Trägerelement 21 und dem Führungsgehäuse 19 mit einer Schwenkbewegung des Trägerelements 21 zu koppeln, das heißt zu überlagern. Hierzu sind die Führungsaussparungen 27 insbesondere zumindest abschnittsweise gewendelt, insbesondere entlang von Schraubenlinien um die Längsachse des Trägerelements 21, die zugleich auch die Längsachse des Führungsgehäuses 19 ist, gewunden ausgebildet. Es ist möglich, dass die Führungsaussparungen 27 entlang ihrer gesamten Erstreckung gewendelt ausgebildet sind. Es ist aber auch möglich, dass sie abschnittsweise, insbesondere in einem Anfangsabschnitt, in welchem das Trägerelement 21 in der Schließstellung des Verschlusselements 9 angeordnet ist, geradlinig ausgebildet sind. In diesem Fall kann zunächst eine rein translatorische Verlagerung des Trägerelements 21 aus der Schließstellung heraus in Richtung der Offenstellung erfolgen, bevor diese Bewegung in eine Überlagerung aus einer Translationsbewegung und einer Schwenkbewegung übergeht. So wird das Verschlusselement 9 also aus der karosserieseitig vorgesehenen Durchgangsöffnung zunächst in senkrechter Richtung herausbewegt, bevor es quer zur Durchgangsöffnung hinter die Außenwand der Karosserie in den dafür freigehaltenen Innenraum bewegt wird.

Die Führungsaussparungen 27 bewirken jedenfalls abschnittsweise aufgrund ihrer räumlich-geometrischen Ausgestaltung und insbesondere aufgrund ihrer Wendelung, dass einer translatorischen Verlagerung des Trägerelements 21 in Richtung der Längsachse des Führungsgehäuses 19, mithin in Figur 2 insbesondere in vertikaler Richtung, eine Schwenkbewegung um diese Längsachse überlagert wird.

Festzuhalten bleibt, dass die Kulissenführung 23 aus der mindestens einen Führungsaussparung 27, insbesondere Führungsnut, welche die sogenannte Kulisse bildet, und dem mit dieser in Eingriff stehenden beziehungsweise in die Führungsaussparung 27 eingreifenden Führungsstift 25, welcher quasi den sogenannten Kulissenstein bildet beziehungsweise dessen Funktion innehat, gebildet ist. Der Führungsstift 25 greift vorzugsweise mit nur geringem Spiel in die Führungsaussparung 27, das heißt der Außendurchmesser beziehungsweise die Dicke des Führungsstiftes 25 ist geringer als die Breite der Führungsaussparung 27.

Bei dem anhand der Figur 2 beschriebenen Ausführungsbeispiel der Verschlussvorrichtung 3 sind die Führungsstifte 25 in Durchgangsöffnungen, insbesondere Bohrungen beziehungsweise Gewindebohrungen in der Außenseite des Führungsgehäuses 19 eingebracht, insbesondere eingeschraubt. Diese Durchgangsöffnungen durchdringen die Außenwand des Führungsgehäuses 19, so dass die Führungsstifte diese durchgreifen und in die jeweilige Führungsaussparung eingreifen können.

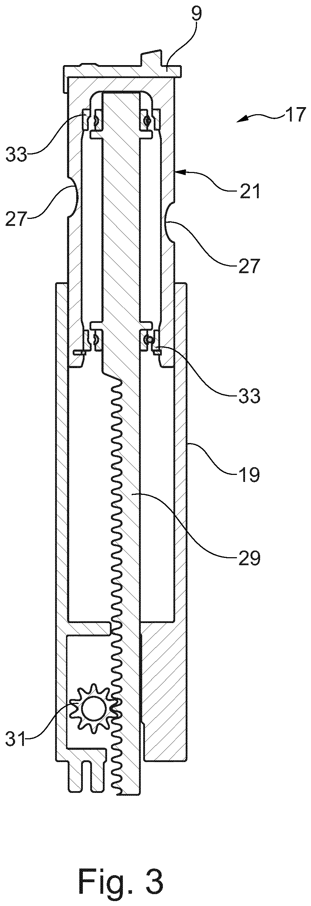

Figur 3 zeigt eine Detail-Längsschnittdarstellung der Verstelleinrichtung 17 gemäß Figur 2. Gleiche und funktionsgleiche Elemente sind mit gleichen Bezugszeichen versehen, sodass insofern auf die vorangegangene Beschreibung verwiesen wird. Das Trägerelement 21 ist mit einem Zugelement 29 mitnehmbar verbunden und gemeinsam mit dem beziehungsweise durch das Zugelement 29 translatorisch verlagerbar, sodass das Trägerelement 21 in axialer Richtung, das heißt hier in Längsrichtung des Führungsgehäuses 19, welche zugleich die Längsmittelachse des Trägerelements 21 ist, translatorisch verlagert wird, wenn das Zugelement 29 in dieser Richtung translatorisch verlagert wird. Über das Zugelement 29 sind insbesondere Zug- und Druckkräfte, die in axiale Richtung weisen, in das Trägerelement 21 einleitbar.

Das Zugelement 29 ist hier als Zahnstange ausgebildet. Es ist mit einem Zahnrad 31 gekoppelt, welches seinerseits mit dem Antrieb 15 antriebswirkverbunden ist. Eine Drehbewegung des Antriebs 15 kann so über das Zahnrad 31 in eine translatorische Bewegung, also eine reine Linearbewegung des Zugelements 29 umgesetzt werden. Mit anderen Worten, das Zugelement 29 wird letztlich nur linear entlang einer durch das Führungsgehäuse vorgegebene Gerade verschoben, wobei die jeweilige Verschieberichtung durch die Drehrichtung des Zahnrads 31 einstellbar ist.

Vorzugsweise ist das Zahnrad 31 über ein insbesondere selbsthemmendes Getriebe mit dem Antrieb 15 verbunden, sodass von außen insbesondere an dem Verschlusselement 9 angreifende Kräfte nicht zu dessen Verlagerung führen können, weil eine solche Verlagerung durch das selbsthemmende Getriebe gesperrt wird.

Das Trägerelement 21 weist einen Hohlraum auf, der zumindest einseitig offen ist und in welchen das Zugelement 29 eingreift beziehungsweise hineinragt. In diesem Hohlbeziehungsweise Aufnahmeraum ist das Zugelement 29 über wenigstens ein Drehlager, hier über zwei Drehlager 33, translatorisch mitnehmbar und zugleich rotatorisch entkoppelt mit dem Trägerelement 21 verbunden, derart also, dass insbesondere bei einer Verschiebebewegung des Zugelements 29 dieses das Trägerelement 21 über zumindest eines der Drehlager 33 mit einer Kraft beaufschlagt, wodurch das Trägerelement 21 ebenfalls relativ gegenüber dem Führungsgehäuse 19 verschoben wird. Aufgrund der Kulissenführung 23 und deren gewendelten beziehungsweise spiralförmig verlaufenden Führungsaussparungen 27 wird dabei das Trägerelement 21 auch um die Translationsachse des Zugelements 29 verschwenkt; es findet also eine Überlagerung der Translations- und Rotations- beziehungsweise Schwenkbewegung des Trägerelements 21 statt. Demgegenüber wird das Zugelement 29 ausschließlich linear bewegt. Es findet also keine Schwenkbewegung des Zugelements relativ gegenüber dem Trägerelement 21 statt.

Das Verschlusselement 9 ist insbesondere als Tankdeckel oder Ladeanschlussdeckel des Fahrzeugs 1 ausgebildet.

Mit der hier vorgeschlagenen Verschlussvorrichtung 3, der Verstelleinrichtung 17 und dem Fahrzeug 1 kann eine besonders bauraumsparende Kinematik für ein insbesondere als Tank- oder Ladeanschlussdeckel ausgebildetes Verschlusselement 9 eines Fahrzeugs 1 bereitgestellt werden.

Festzuhalten bleibt, dass die Verschlussvorrichtung 3 als komplett vormontierbare Baueinheit ausgebildet werden kann beziehungsweise ist und als Ganzes am Fahrzeug, vorzugsweise in einem Montageschritt, angebracht werden kann.

## Patentansprüche

1. Verschlussvorrichtung (3) zum Verschließen einer Durchgangsöffnung (5) in einer Fahrzeugkarosserie (7), wobei über die Durchgangsöffnung (5) ein Innenraum mit einer Befüllungs- oder Anschlusseinrichtung zugänglich ist, mit einem mittels einer Verstelleinrichtung (17) verlagerbaren Verschlusselement (9), das mittels eines Antriebs (15) zwischen einer Offenstellung, in der die Durchgangsöffnung (5) freigegeben ist, und einer Schließstellung, in der die Durchgangsöffnung (5) durch das Verschlusselement (9) geschlossen ist, verlagerbar ist, wobei das Verschlusselement (9) in der Schließstellung zumindest bereichsweise in der Durchgangsöffnung (5) angeordnet ist, und wobei die Verschlussvorrichtung (3) eingerichtet ist, um das Verschlusselement (9) von der Schließstellung in die Offenstellung mit einer Kombination aus einer translatorischen Bewegung und einer Schwenkbewegung in den Innenraum der Fahrzeugkarosserie (7) zu verlagern,
**dadurch gekennzeichnet,**
- **dass** die Verstelleinrichtung (17) ein an einer Fahrzeugkarosserie (7) raumfest anordenbares Führungsgehäuse (19) umfasst, in dem ein Trägerelement (21) translatorisch und schwenkbar geführt ist, wobei das Trägerelement (21) das Verschlusselement (9) aufweist,
- **dass** eine Kulissenführung (23) vorgesehen ist, mittels der das Trägerelement (21) gegenüber dem Führungsgehäuse (19) translatorisch verlagerbar und schwenkbar ist,
- **dass** ein über wenigstens ein Drehlager (33) mit dem Trägerelement (21) translatorisch mitnehmbar und zugleich rotatorisch entkoppelt verbundenes Zugelement (29) vorgesehen ist, das mittels des Antriebs (15) translatorisch verlagerbar ist.

2. Verschlussvorrichtung (3) nach Anspruch 1,
**dadurch gekennzeichnet, dass**
das Verschlusselement (9) eine Außenfläche (11) aufweist, die in der Schließstellung bündig mit einer die Durchgangsöffnung (5) umgebenden Karosserieaußenfläche (13) der Fahrzeugkarosserie (7) angeordnet ist.

3. Verschlussvorrichtung (3) nach einem der vorhergehenden Ansprüche,
**dadurch gekennzeichnet, dass**
der dem Verschlusselement (9) zu dessen Verlagerung zwischen der Schließstellung und der Offenstellung zugeordnete Antrieb (15) ein motorischer Antrieb (15) ist.

4. Verschlussvorrichtung (3) nach Anspruch 1,
**dadurch gekennzeichnet, dass**
das Führungsgehäuse (19) rohrförmig ausgebildet ist.

5. Verschlussvorrichtung (3) nach Anspruch 1,
**dadurch gekennzeichnet, dass**
die Kulissenführung (23) ein erstes Teil, ausgewählt aus dem Führungsgehäuse (19) und dem Trägerelement (21), welches wenigstens einen Führungsstift (25) aufweist, und ein zweites, von dem ersten Teil verschiedenes Teil, ausgewählt aus dem Trägerelement (21) und dem Führungsgehäuse (19), welches wenigstens eine Führungsaussparung (27) aufweist, umfasst, wobei der wenigstens eine Führungsstift (25) in die wenigstens eine Führungsaussparung (27) eingreift, und wobei die wenigstens eine Führungsaussparung (27) ausgebildet ist, um zumindest abschnittsweise eine translatorische Relativbewegung zwischen dem Trägerelement (21) und dem Führungsgehäuse (19) mit einer Schwenkbewegung des Trägerelements (21) zu koppeln.

6. Verschlussvorrichtung (3) nach Anspruch 1,
**dadurch gekennzeichnet, dass**
das Zugelement (29) als Zahnstange ausgebildet ist.

7. Fahrzeug (1) mit einer Verschlussvorrichtung (3) nach einem der Ansprüche 1 bis 6, wobei das Verschlusselement (9) als Tankdeckel oder als Ladeanschlussdeckel ausgebildet ist.

## Claims

1. Closure device (3) for closing a through-opening (5) in a vehicle body (7), wherein an interior with a filling or connecting device is accessible via the through-opening (5), the closure device having a closure element (9), which is displaceable by means of an adjusting device (17) and movable by means of a drive (15) between an open position in which the through-opening (5) is uncovered and a closed position in which the through-opening (5) is closed by the closure element (9), wherein the closure element (9) is at least in certain areas located in the through-opening (5) in the closed position and wherein the closure device (3) is arranged to move the closure element (9) into the interior of the vehicle body (7) from the closed position into the open position with a combination of a translational movement and a pivoting movement, **characterised in that**
- the adjusting device (17) comprises a guide housing (19), which can be located at a vehicle body (7) in a spatially fixed manner and in which a support element (21) is guided translationally and pivotably, the support element (21) having the closure element (9),
- a sliding block guide (23) is provided, by means of which the support element (21) can be displaced translationally and pivoted with respect to the guide housing (19),
- a traction element (29) is provided, which can be carried along translationally with the support element (21) while being connected thereto in a rotationally decoupled manner and which can be displaced translationally by means of the drive (15).

2. Closure device (3) according to claim 1,
**characterised in that**
the closing element (9) has an outer surface (11), which is flush with a body outer surface (13) of the vehicle body (9) surrounding the through-opening (5) in the closed position.

3. Closure device (3) according to any of the preceding claims,
**characterised in that**
the drive (15) assigned to the closure element (9) for its movement between the closed position and the open position is a motor drive (15).

4. Closure device (3) according to claim 1,
**characterised in that**
the guide housing (19) is designed to be tubular.

5. Closure device (3) according to claim 1,
**characterised in that**
the sliding block guide (23) comprises a first part selected from the guide housing (19) and the support element (21) and having at least one guide pin (25) and a second part, different from the first part, selected from the support element (21) and the guide housing (19) and having at least one guide recess (27), wherein the at least one guide pin (25) engages with the at least one guide recess (27), and wherein the at least one guide recess (27) is designed to couple at least in certain areas a translational relative movement between the support element (21) and the guide housing (19) to a pivoting movement of the support element (21).

6. Closure device (3) according to claim 1,
**characterised in that**
the traction element (29) is designed as a rack.

7. Vehicle (1) with a closure device (3) according to any of claims 1 to 6, wherein the closure device (3) is designed as a filler cap or as a charger connection cap.

## Revendications

1. Dispositif de fermeture (3) pour fermer une ouverture traversante (5) dans une carrosserie de véhicule (7), l'ouverture traversante (5) permettant d'accéder à un espace intérieur d'un dispositif de remplissage ou de branchement, comportant un élément de fermeture (9) pouvant être déplacé au moyen d'un dispositif de réglage (17), ledit élément de fermeture pouvant être déplacé au moyen d'un entraînement (15) entre une position ouverte, dans laquelle l'ouverture traversante (5) est libérée, et une position fermée dans laquelle l'ouverture traversante (5) est fermée par l'élément de fermeture (9), l'élément de fermeture (9) dans la position fermée étant disposée au moins en partie dans l'ouverture traversante (5) et le dispositif de fermeture (3) étant conçu pour déplacer l'élément de fermeture de la position fermée à la position ouverte par une combinaison d'un mouvement de translation et d'un mouvement de basculement dans l'espace intérieur de la carrosserie de véhicule (7),
**caractérisé en ce que**
le dispositif de fermeture (17) comprenant un logement de guidage (19) disposé à demeure sur une carrosserie de véhicule (7), dans lequel un élément de support (21) est guidé par translation et par basculement, l'élément support (21) comportant l'élément de fermeture (9),
**en ce qu'**un guide à rainures (23) sert à faire basculer par translation et à déplacer l'élément de support (21) par rapport au logement de guidage (19), **en ce qu'**un élément de traction (29) est relié par au moins un palier rotatif (33) à l'élément de support (21) pour être entraîné par translation et simultanément désolidarisé par rotation, ledit élément de traction pouvant être déplacé par translation par l'entraînement (15).

2. Dispositif de fermeture (3) selon la revendication 1, **caractérisé en ce que** l'élément de fermeture (9) comporte une face extérieure (11) qui est disposée dans la position de fermeture dans l'alignement d'une surface extérieure de carrosserie (13) de la carrosserie de véhicule (7) entourant l'ouverture traversante (5).

3. Dispositif de fermeture (3) selon l'une quelconque des revendications précédentes, **caractérisé en ce que** l'entraînement (15) associé à l'élément de fermeture (9) pour son déplacement entre la position fermée et la position ouverture est un entraînement motorisé (15).

4. Dispositif de fermeture (3) selon la revendication 1, **caractérisé en ce que** le logement de guidage (10) est conçu sous la forme d'un tube.

5. Dispositif de fermeture (3) selon la revendication 1, **caractérisé en ce que** le guidage à rainures (23) comporte une première partie sélectionnée parmi le logement de guidage (19) et l'élément de support (21) qui comporte au moins une tige de guidage (25) et une seconde partie différente de la première, sélectionnée parmi l'élément de support (21) et le logement de guidage (19) qui comporte au moins une rainure de guidage (27), l'au moins une tige de guidage (25) s'insérant dans l'au moins une rainure de guidage (27), et l'au moins une rainure de guidage (27) étant conçue pour, au moins à certains endroits, coupler un mouvement relatif de translation entre l'élément de support (21) et le logement de guidage (19) à un mouvement de basculement de l'élément de support (21).

6. Dispositif de fermeture (3) selon la revendication 1, **caractérisé en ce que** l'élément de traction (29) étant conçu sous la forme d'une crémaillère.

7. Véhicule (1) équipé d'un dispositif de fermeture (3) selon l'une quelconque des revendications 1 à 6, dans lequel l'élément de fermeture (9) étant conçu sous la forme de couvercle de réservoir ou sous la forme de couvercle de connecteur de charge.
